# EUROPEAN PATENT APPLICATION

(11) **EP 4 414 858 A1**
(43) Date of publication of application: **14.08.2024**
(21) Application number: 22885267.9
(22) Date of filing: 03.08.2022
(51) Int. Cl.: G06F 16/27, G06F 16/23

(54) **PROCESSING METHOD AND APPARATUS FOR COMMUNICATION SERVICE DATA, AND COMPUTER STORAGE MEDIUM**

(30) Priority: 25.10.2021 CN 202111239756
(71) Applicant: ZTE Corporation, Shenzhen, Guangdong 518057 (CN)
(72) Inventor: ZHANG, Yueming, Shenzhen, Guangdong 518057 (CN)
(74) Representative: Bals & Vogel Patentanwälte PartGmbB
(86) International application number: PCT/CN2022/110030
(87) International publication number: WO 2023/071367

(57) **Abstract**

Disclosed in the present application are a processing method and apparatus for communication service data. The processing method comprises: acquiring a query request based on a query time point (S100); querying a main database to obtain a first communication service data set at the current time point, and querying incremental backup data in a mirror database to obtain a second communication service data set (S200); merging the first communication service data set with the second communication service data set to form a merged data set, and performing screening on communication service data in the merged data set according to a primary key, and the query time point corresponding to the query request, so as to obtain a screened data set (S300); and constructing, according to the screened data set, a communication service topology portrait for representing a communication service data state (S400).

## Description

### CROSS-REFERENCE TO RELATED APPLICATION

This application is filed on the basis of Chinese patent application No. 202111239756.8 filed October 25, 2021, and claims priority to the Chinese patent application, the entire contents of which are incorporated herein by reference.

### TECHNICAL FIELD

The present disclosure belongs to the technical field of communications, and more particularly, to a method and apparatus for processing communication service data, and a computer storage medium.

### BACKGROUND

A digital twin represents an equivalent mapping of the physical world in the information world, which includes three parts: physical products in physical space, virtual products in virtual space, and data and information interaction interfaces between physical space and virtual space.

Mirrored network is the practice of "Digital Twin" in the communication industry. A mirrored network is the mirror image of an actual communication network and the equivalent mapping of the actual communication network in digital space. It can independently perform analysis, simulation, and prediction in digital space, and interact with the actual network, providing a better (faster, easier, more active and more intelligent) full-service life-cycle management of the communication network.

The mirrored network involves a large number of data mirrors of communication service data with historical changes, including configuration changes, alarms, performance, status, etc. A current challenge within the industry is developing methods for swiftly querying communication service data at specific points in time and quickly retrieving historical service statuses of the communication network. Such capabilities are crucial for providing data basis and data foundation for conducting analyses, simulations, predictions, and other operations reliant on historical data.

### SUMMARY

The following is a summary of the subject matter set forth in this description. This summary is not intended to limit the scope of protection of the claims.

Embodiments of the present disclosure provide a method and apparatus for processing communication service data, and a computer storage medium.

In accordance with a first aspect of the present disclosure, an embodiment provides a method for processing communication service data, where the communication service data is stored in a main database and a mirror database, and the mirror database is configured for incremental backup of the main database, the method including: acquiring a query request based on a query time point; querying a main database to obtain a first communication service data set at a current time point, and querying incremental backup data in a mirror database to obtain a second communication service data set; merging the first communication service data set with the second communication service data set to form a merged data set, and performing screening on communication service data in the merged data set according to a data primary key and the query time point corresponding to the query request to obtain a screened data set; and constructing, according to the screened data set, a communication service topology profile for representing a communication service data state.

In accordance with a second aspect of the present disclosure, an embodiment provides an apparatus for processing communication service data, including at least one processor and a memory communicatively connected to the at least one processor, where the memory stores an instruction executable by the at least one processor which, when executed by the at least one processor, causes the at least one processor to carry out the method for processing communication service data of the first aspect.

In accordance with a third aspect of the present disclosure, an embodiment provides a computer-readable storage medium, storing a computer-executable instruction which, when executed by a computer, causes the computer to carry out the method for processing communication service data of the first aspect.

Additional features and advantages of the present disclosure will be set forth in the description which follows, and in part will be obvious from the description, or may be learned by the practice of the present disclosure. The objects and other advantages of the present disclosure can be realized and obtained by the structures particularly pointed out in the description, claims and drawings.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, and are not intended to limit the technical schemes of the present disclosure.
FIG. 1 is an overall flowchart of a method for processing communication service data according to an embodiment of the present disclosure;
FIG. 2 is a flowchart of obtaining a second communication service data set according to an embodiment of the present disclosure;
FIG. 3 is a flowchart of obtaining a first communication service data set according to an embodiment of the present disclosure;
FIG. 4 is a flowchart of obtaining a screened data set according to an embodiment of the present disclosure;
FIG. 5 is a schematic diagram showing incremental backup of a main database by a mirror database according to an embodiment of the present disclosure;
FIG. 6 is a schematic diagram showing a relative relationship between a data deletion scenario and a query time point according to an embodiment of the present disclosure;
FIG. 7 is a schematic diagram showing a relative relationship between a data creation scenario and a query time point according to an embodiment of the present disclosure;
FIG. 8 is a schematic diagram showing a relative relationship between a data modification scenario and a query time point according to an embodiment of the present disclosure; and
FIG. 9 is a schematic structural diagram of an apparatus for processing communication service data according to an embodiment of the present disclosure.

### DETAILED DESCRIPTION

To make the objects, technical schemes, and advantages of the present disclosure clear, the present disclosure is described in further detail in conjunction with accompanying drawings and embodiments. It should be understood that the specific embodiments described herein are merely used for illustrating the present disclosure, and are not intended to limit the present disclosure.

Digital twin is the equivalent mapping of the physical world in the information world, which includes three parts: physical products in physical space, virtual products in virtual space, and data and information interaction interfaces between physical space and virtual space.

Mirrored network is the practice of "Digital Twin" in the communication industry. A mirrored network is the mirror image of an actual communication network and the equivalent mapping of the actual communication network in digital space. It can independently perform analysis, simulation, and prediction in digital space, and interact with the actual network, providing a better (faster, easier, more active and more intelligent) full-service life-cycle management of the communication network.

The mirrored network involves a large number of data mirrors of communication service data with historical changes, including configuration changes, alarms, performance, status, etc. At present, how to quickly query the communication service data at a time point and quickly obtain the historical service status of the communication network after finding the communication service data to provide a data basis and data foundation for analysis, simulation, prediction, and other operations based on historical data is a problem to be solved in the industry.

In view of the above, the embodiments of the present disclosure provide a method and apparatus for processing communication service data, and a computer storage medium. Communication service data at a historical time point is queried and a communication service topology profile of a state of the communication service data at the historical time point is constructed accordingly. The historical service status of the communication network can be quickly obtained according to the obtained communication service topology profile, thereby providing a data basis and data foundation for analysis, simulation, prediction, and other operations based on historical data.

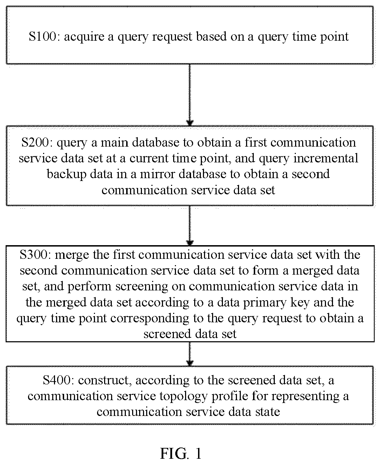

Referring to FIG. 1, an embodiment of the present disclosure provides a method for processing communication service data. The communication service data is stored in a main database and a mirror database. The mirror database is configured for incremental backup of the main database. The method includes, but not limited to, the following steps S100, S200, S300, and S400.

At 5100, a query request based on a query time point is acquired.

At S200, a main database is queried to obtain a first communication service data set at a current time point, and incremental backup data in a mirror database is queried to obtain a second communication service data set.

At S300, the first communication service data set is merged with the second communication service data set to form a merged data set, and screening is performed on communication service data in the merged data set according to a data primary key and the query time point corresponding to the query request to obtain a screened data set.

At S400, a communication service topology profile for representing a communication service data state is constructed according to the screened data set.

In the embodiment of the present disclosure, the communication service data is stored in the main database and the mirror database, and the mirror database is configured for incremental backup of the main database. To better illustrate the present disclosure, a process of incremental backup of the main database by the mirror database is described below by way of example.

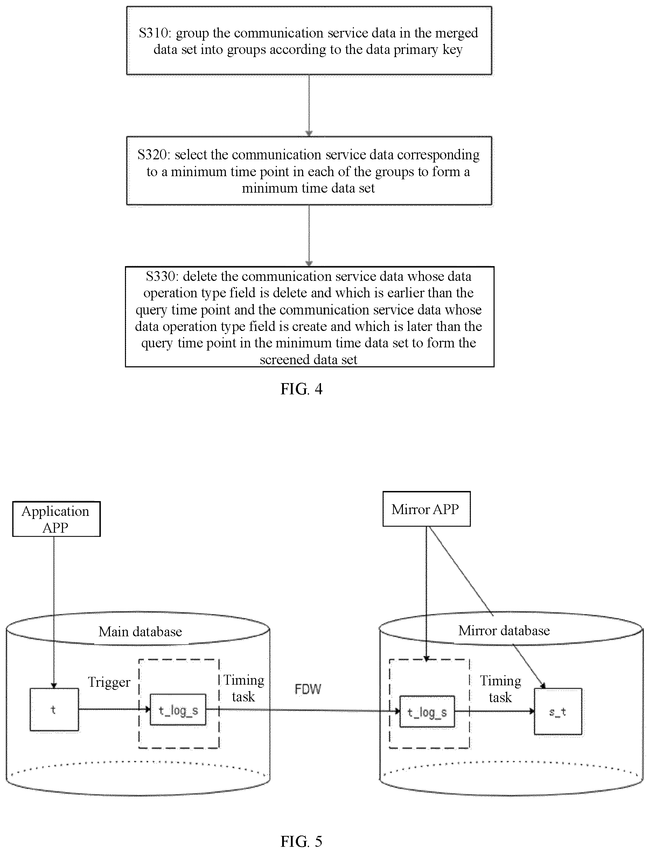

Referring to FIG. 5, database tables of the main database correspond one-to-one to database tables of the mirror database. A corresponding event trigger is set for a table to be backed up on the main database. After an application APP performs an operation (adding/deleting/modifying) on a database table t according to a service requirement, the corresponding event trigger set on the database table t is triggered. A change log of the database table t is recorded in an intermediate table t_log_s. Then, after a time interval of, for example, one minute, a timer set on the first database is triggered. A content of the intermediate table t_log_s of the first database is synchronized to an intermediate table t_log_s of the second database through a database asynchronous processing module FDW (Foreign Data Wrappers). The mirror database is updated according to the intermediate table t_log_s, and after a time interval of, for example, one minute, a timer set on the mirror database is also triggered. The intermediate table t_log_s is converted into incremental backup data of an s_t table. The s_t table is a backup table in the mirror database corresponding to the t table in the main database. It can be understood that according to an actual data amount and a performance requirement of a service system, the synchronization of the intermediate tables t_log_s of the main database and the mirror database may also be triggered in other manners than the manner of setting the timer. For example, for a service with a small actual data amount and requiring high performance of the service system, i.e., fast response, e.g., a service of changing a password of a user account, the synchronization may be triggered through a log change notification set in the database, such that the changed password of the user account can be quickly synchronized to the mirror database, to prevent the loss of important data due to system crash. The synchronization method is not limited in the present disclosure, and may be chosen by those having ordinary skills in the art according to actual situations.

Compared with conventional full storage, the incremental backup of the main database by the mirror database not only takes a shorter processing time for data backup, but also greatly reduces unnecessary data storage, thereby improving the utilization of space of the mirror database and achieving mass storage of mirror data.

It can be understood that to further improve the utilization of the space of the mirror database, the mirror database may be a time series database. Conventional databases cannot well compress time series data such as service data in a communication network, and occupy a large number of storage resources. The time series database can properly select a coding compression algorithm according to the characteristic of increment in time and dimension repetition of the time series data, to well compress the service data in the communication network, thereby improving the utilization of the space of the mirror database and storing more mirror data.

It should be noted that the incremental backup data found in the mirror database in S200 is incrementally backed up through the following fields:
a data operation type field for recording a data operation type;
a pre-change data record field for recording a pre-change data record;
a post-change data record field for recording a post-change data record; and
a data change time field for recording a data change time,
where the pre-change data record and the post-change data record are stored in the form of communication service data.

A specific data structure of the incremental backup data in the mirror database is shown in Table 1.

**Table 1. Data structure of incremental backup data**

| Field | Type | Meaning |
|---|---|---|
| op | text | Operation type, including create/delete/modify |
| old_rec | hstore | Record before change |
| new_rec | hstore | Record after change |
| crt_time | timestamp | Change time |
| Other fields, which are the same as the definitions of fields in the t table of the main database | | |

In Table 1, op is a data operation type field for recording a data operation type, and has three values: create, delete, and modify; old_rec is a pre-change data record field for recording a pre-change data record; new_rec is a post-change data record field for recording a post-change data record; and crt_time is a data change time field for recording a data change time. For convenience of description, op, old_rec, new_rec, and crt_time are used below to describe the fields for backup of incremental backup data in the corresponding mirror database.

It should be noted that new_rec and old_rec are stored in the form of communication service data to facilitate subsequent data set merging and processing, op has three values: create, delete, and modify, and different op values correspond to different stored old_rec and new_rec values. It can be understood that to facilitate subsequent querying and processing, old_rec and new_rec values corresponding to different op values should be given. Table 2 shows an example of different op values and corresponding old_rec and new_rec values stored in the mirror database. As shown in Table 2, when the value of op is create, the value of old_rec is null, and the value of new_rec is a specific record of the creation; when the value of op is delete, the value of old_rec is a specific record of the deletion, and the value of new_rec is null; and when the value of op is modify, the value of old_rec should be a specific record before modification, and the value of new_rec should be a specific record after modification.

**Table 2. Different op values and corresponding old_rec and new_rec values stored**

| op | old_rec | new_rec |
|---|---|---|
| Create | null | Specific record |
| Delete | Specific record | Null |
| Modify | Record before modification | Record after modification |

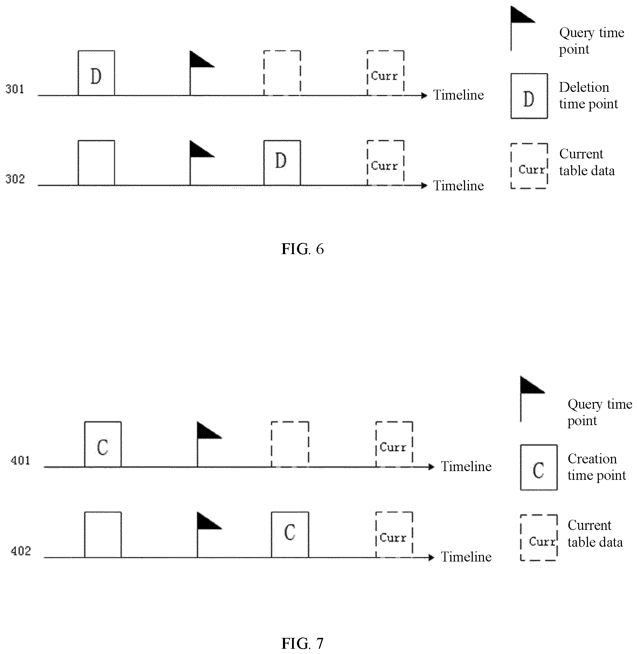

It can be understood that different op values, i.e., different data operation scenarios have different relative relationships with the query time point. FIG. 6 shows a relative relationship between a scenario corresponding to the op value being delete and a specified historical query time point. In a scenario 301, the specified historical query time point is later than a deletion time point, indicating that data at the query time point should not include data that has been deleted at the deletion time point. In a scenario 302, the query time point is earlier than the deletion time point, indicating that data at the query time point should include data deleted at the deletion time point. FIG. 6 includes two timelines, respectively corresponding to the scenario 301 and the scenario 302. In the scenario 301, a dashed line box is used to represent a set of data that is deleted before the query time point and cannot be found at the query time point. In the scenario 302, a solid line box is used to represent a set of data that is deleted after the query time point and should be found at the query time point. Therefore, for a change scenario corresponding to the op value being delete, a query result of querying communication service data at the query time point should be old_rec corresponding to a minimum time point later than the specified query time point in the mirror database, or should be null.

FIG. 7 shows a relative relationship between a scenario corresponding to the op value being create and a query time point. In a scenario 401, the query time point is later than the creation time point, indicating that data at the query time point should include data that has been created at the creation time point. In a scenario 402, the query time point is earlier than the creation time point, indicating that data at the query time point should not include data created at the creation time point. FIG. 7 includes two timelines, respectively corresponding to a scenario 401 and a scenario 402. In the scenario 401, a dashed line box is used to represent a set of data that is created before the query time point and should be found at the query time point. In the scenario 402, a solid line box is used to represent a set of data created before the query time point. Because data created after the query time point does not belong to this set of data, the data created after the query time point should not appear in a set of data that can be found at the query time point. Therefore, for a change scenario corresponding to the op value being create, a query result of querying communication service data at the query time point should be new_rec corresponding to a maximum time point earlier than the specified query time point in the mirror database, or should be null.

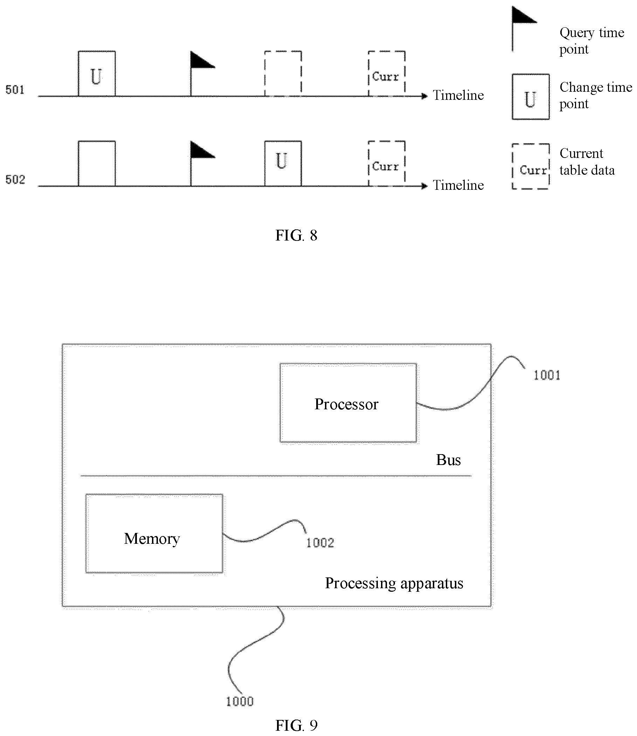

FIG. 8 shows a relative relationship between a scenario corresponding to the op value being modify and a query time point. In a scenario 501, the query time point is later than the modification time point, indicating that data at the query time point should include data modified at the modification time point. In a scenario 502, the query time point is earlier than the modification time point, indicating that data at the query time point should include corresponding unmodified data before the modification time point. FIG. 8 includes two timelines, respectively corresponding to the scenario 501 and the scenario 502. In the scenario 501, a dashed line box is used to represent a set of data after modification and before the query time point. In the scenario 502, a solid line box is used to represent a set of data before modification and after the query time point. Therefore, for a change scenario corresponding to the op value being modify, a query result of querying communication service data at the query time point should be old_rec corresponding to a minimum time point later than the query time point in the mirror database, or should be new_rec corresponding to a maximum time point earlier than the query time point in the mirror database.

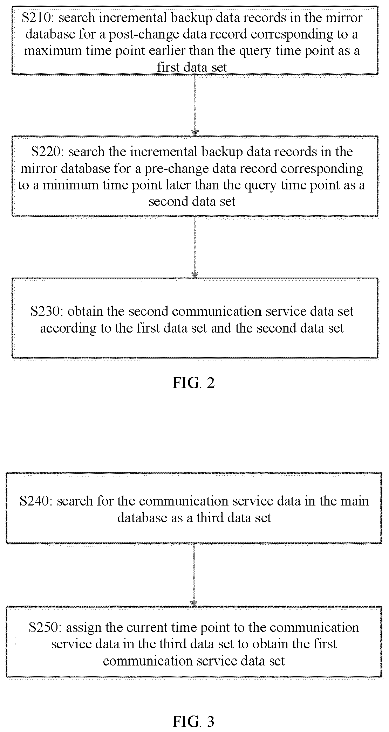

The relative relationships between the scenarios corresponding to the op values and the query time point are combined and optimized. Referring to FIG. 2, obtaining the second communication service data set in S200 further includes the following steps S210, S220, and S230.

At S210, incremental backup data records in the mirror database are searched for a post-change data record corresponding to a maximum time point earlier than the query time point as a first data set.

At S220, the incremental backup data records in the mirror database are searched for a pre-change data record corresponding to a minimum time point later than the query time point as a second data set.

At S230, the second communication service data set is obtained according to the first data set and the second data set.

It can be understood that if all new_rec and old_rec before and after the query time point are queried, there will be a large amount of invalid data in the result set obtained through the query, and the result set needs to be cleaned later. If old_rec is found before the query time point, it indicates that the communication service data queried before the query time point has changed. Because the change has been completed before the query time point, the communication service data at the query time point should be data after the change. Similarly, if new_rec is found after the query time point, it indicates that the change occurs after the query time point, and the communication service data at the query time point should be data before the change. Therefore, based on the above, effective query is performed through S210 and S220 to clear invalid data in advance, thereby improving the precision of data in the second communication service data set.

It can be understood that the process of searching incremental backup data records in the mirror database for a post-change data record corresponding to a maximum time point earlier than the query time point as a first data set in S210 may further include: searching the incremental backup data records in the mirror database for post-change data records earlier than the query time point as a first post-change data set, grouping the first post-change data set into groups according to the data primary key, and selecting the communication service data corresponding to a maximum time point in each group to form the first data set. Similarly, the process of searching the incremental backup data records in the mirror database for a pre-change data record corresponding to a minimum time point later than the query time point as a second data set in S220 may further include: searching the incremental backup data records in the mirror database for pre-change data records later than the query time point as a first pre-change data set, grouping the first pre-change data set into groups according to the data primary key, and selecting the communication service data corresponding to a minimum time point in each group to form the second data set.

It should be noted that although the second communication service data set includes valid incremental backup data having changed in a time period from the time at which the backup of the main database by the mirror database begins to a current time, and the communication service data at the query time point can be obtained from the communication service data having changed in the time period from the time at which the backup of the main database by the mirror database begins to the current time according to the second communication service data set, it is possible that some of the communication service data at the query time point have not changed in the time period from the time at which the backup of the main database by the mirror database begins to the current time, so the main database is queried to obtain the first communication service data set at the current time point in S200. To facilitate the subsequent merging and processing of the first communication service data set and the second communication service data set, referring to FIG. 3, obtaining the first communication service data set in S200 further includes the following steps S240 and S250.

At S240, the communication service data in the main database is searched for as a third data set.

At S250, the current time point is assigned to the communication service data in the third data set to obtain the first communication service data set.

It can be understood that to obtain the communication service data corresponding to the query time point, the first communication service data set and the second communication service data set should be merged and screened. Referring to FIG. 4, S300 further includes the following steps S310, S320, and S330.

At S310, the communication service data in the merged data set is grouped into groups according to the data primary key.

At S320, the communication service data corresponding to a minimum time point in each of the groups is selected to form a minimum time data set.

At S330, the communication service data whose data operation type field is delete and which is earlier than the query time point and the communication service data whose data operation type field is create and which is later than the query time point in the minimum time data set are deleted to form the screened data set.

In S310, first, the combined data set of the first communication service data set and the second communication service data set is grouped according to the data primary key. It can be understood that the data primary key may be in a commonly used Universally Unique Identifier (UUID) format, to ensure that the data primary key is unique and prevent the database query result from being inaccurate due to a non-unique data primary key.

The reason for selecting the communication service data corresponding to the minimum time point in each of the groups in S320 is as follows.

It can be understood that for same communication service data in the merged data set, a value relationship between time points corresponding to new_rec, old_rec, and a current record is: new_rec < old_rec < current record. If new_rec and old_rec of a piece of communication service data in the second communication service data set both have a value of "specific record", it indicates that the piece of communication service data has changed once before the query time point and once after the query time point. In this case, specific values recorded by new_rec and old_rec are the same, so query results obtained by selecting new_rec and old_rec are consistent. It can be understood that if only new_rec of a piece of communication service data in the second communication service data set has a value of "specific record", it indicates that the communication service data has changed before the query time point. In this case, the query result at the query time point should be new_rec, not the current piece of communication service data in the first communication service data set, because the piece of communication service data may have changed after the query time point. The same applies to a case where only old_rec of a piece of communication service data in the second communication service data set. Finally, for this piece of communication service data, only current communication service data in the first communication service data set exists in the combined data set. In this case, the current communication service data in the first communication service data is selected.

It can be understood that after S320 is executed, it can be learned from FIG. 5 and FIG. 6 that the minimum time data set may also include new_rec of a previously deleted communication service record or old_rec of a later created communication service record, and it can be learned from Table 2 that the values of new_rec and old_rec are both null. To further improve the precision of the query result, it is necessary to screen the data in the minimum time data set. Therefore, S330 is executed to delete the communication service data whose data operation type field is delete and which is earlier than the query time point and the communication service data whose data operation type field is create and which is later than the query time point in the minimum time data set to obtain the final screened data set.

It should be noted that in actual communication service data processing, when the query request acquired in S100 includes only one query time point, the communication service topology profile constructed according to the screened data set represents the communication service data state at the query time point; and when the query request acquired in S 100 includes a query time interval having a plurality of query time points, the communication service topology profile constructed according to the screened data set represents a change of the communication service data in the query time interval. It can be understood that when the query request acquired in 5100 includes a query time interval having a plurality of query time points, the communication service topology profile includes a plurality of image frames corresponding to the query time points. The image frames may be selected according to a preset time interval and played evenly. For example, the query time interval is 14:00-14:20 of a day, the obtained image frames may be played based on a time interval of one minute. Image frames within one minute, for example, an image frame at 14:01:30, are discarded. When the communication service topology profile includes a plurality of image frames corresponding to the query time points, the image frames may be selected and played according to a condition whether communication service data changes in the query time interval. For example, the query time interval is 14:01-14:30 of a day and the communication service data has changed only at 14:01:50. In this case, only an image frame at the moment 14:01:50 is selected, and image frames corresponding to other moments at which no change occurs are discarded. To reflect the change of the communication service data, an image frame at the beginning of the query time interval is displayed by default during playing the image frames. It can be understood that the image frames may be selected and played according to a set threshold and the condition whether communication service data changes in the query time interval. For example, the communication service data changes at a moment in the query time interval, but the change is a normal change of the communication network. In this case, an image frame at this moment may not be selected. If the communication network is congested at a moment in the query time interval, i.e., the change exceeds the set threshold, an image frame at this moment is selected for analysis.

Referring to FIG. 9, an apparatus 1000 for processing communication service data includes a control processor 1001 and a memory 1002, which are connected, for example, by a bus. The memory 1002, as a non-transitory computer-readable storage medium, may be configured for storing a non-transitory software program and a non-transitory computer-executable program. In addition, the memory 1002 may include a high-speed random access memory, and may also include a non-transitory memory, e.g., at least one magnetic disk storage device, flash memory device, or other non-transitory solid-state storage device. In some implementations, the memory 1002 may include memories located remotely from the control processor 1001, and the remote memories may be connected to the apparatus 1000 for processing communication service data via a network. Examples of the network include, but are not limited to, the Internet, an intranet, a local area network, a mobile communication network, and combinations thereof.

Those having ordinary skills in the art may understand that the apparatus structure shown in FIG. 9 does not constitute a limitation to the apparatus 1000 for processing communication service data, and apparatus may include more or fewer components than those shown in the figure, or some components may be combined, or a different component arrangement may be used.

An embodiment of the present disclosure provides a computer-readable storage medium, storing a computer-executable instruction which, when executed by one or more control processors, for example, by a control processor 1001 in FIG. 9, may cause the one or more control processors to implement the method for processing communication service data in the above method embodiments, for example, implement the method steps S100 to S400 in FIG. 1, the method steps S210 to S230 in FIG. 2, the method steps S240 to S250 in FIG. 3, or the method steps S310 to S330 in FIG. 4.

The apparatus embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

The method for processing communication service data provided in the embodiments of the present disclosure at least has the following beneficial effects. In the embodiments of the present disclosure, when acquiring a query request based on a query time point, a main database is queried to obtain a first communication service data set at a current time point, and incremental backup data in a mirror database is queried to obtain a second communication service data set. The first communication service data set is merged with the second communication service data set to form a merged data set, and screening is performed on communication service data in the merged data set according to a data primary key and the query time point to obtain a screened data set. The screened data set is the communication service data corresponding to the query time point. Therefore, a communication service topology profile for representing a communication service data state can be constructed according to the screened data set. The historical service status of the communication network can be quickly obtained according to the obtained communication service topology profile, thereby providing a data basis and data foundation for analysis, simulation, prediction, and other operations based on historical data.

Those having ordinary skills in the art can understand that all or some of the steps and systems in the methods disclosed above can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a read-only memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and which can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

Although some implementations of the present disclosure have been described above, the present disclosure is not limited to the implementations described above. Those having ordinary skills in the art can make various equivalent modifications or replacements without departing from the scope of the present disclosure. Such equivalent modifications or replacements fall within the scope defined by the claims of the present disclosure.

## Claims

1. A method for processing communication service data, wherein the communication service data is stored in a main database and a mirror database, and the mirror database is configured for incremental backup of the main database, the method comprising:
acquiring a query request based on a query time point;
querying the main database to obtain a first communication service data set at a current time point, and
querying incremental backup data in the mirror database to obtain a second communication service data set;
merging the first communication service data set with the second communication service data set to form a merged data set, and performing screening on communication service data in the merged data set according to a data primary key and the query time point corresponding to the query request to obtain a screened data set; and
constructing, according to the screened data set, a communication service topology profile for representing a communication service data state.

2. The method for processing communication service data of claim 1, wherein the incremental backup data is incrementally backed up through the following fields:
a data operation type field for recording a data operation type;
a pre-change data record field for recording a pre-change data record;
a post-change data record field for recording a post-change data record; and
a data change time field for recording a data change time,
wherein the pre-change data record and the post-change data record are stored in the form of communication service data.

3. The method for processing communication service data of claim 2, wherein querying incremental backup data in the mirror database to obtain a second communication service data set comprises:
searching incremental backup data records in the mirror database for a post-change data record corresponding to a maximum time point earlier than the query time point as a first data set;
searching the incremental backup data records in the mirror database for a pre-change data record corresponding to a minimum time point later than the query time point as a second data set; and
obtaining the second communication service data set according to the first data set and the second data set.

4. The method for processing communication service data of claim 2, wherein querying the main database to obtain a first communication service data set at a current time point comprises:
searching for the communication service data in the main database as a third data set; and
assigning the current time point to the communication service data in the third data set to obtain the first communication service data set.

5. The method for processing communication service data of claim 2, wherein performing screening on communication service data in the merged data set according to a data primary key and the query time point corresponding to the query request to obtain a screened data set comprises:
grouping the communication service data in the merged data set into groups according to the data primary key;
selecting the communication service data corresponding to a minimum time point in each of the groups to form a minimum time data set; and
deleting the communication service data whose data operation type field is delete and which is earlier than the query time point and the communication service data whose data operation type field is create and which is later than the query time point in the minimum time data set to form the screened data set.

6. The method for processing communication service data of claim 1, wherein in response to the query request comprising only one query time point, the communication service topology profile represents the communication service data state at the query time point; and
in response to the query request comprising a query time interval having a plurality of query time points, the communication service topology profile represents a change of the communication service data in the query time interval.

7. The method for processing communication service data of claim 6, wherein in response to the query request comprising the query time interval having the plurality of query time points, the communication service topology profile comprises a plurality of image frames corresponding to the query time points, and the communication service topology profile is displayed in the following manner:
selecting image frames in the communication service topology profile based on a preset time interval, and playing the selected image frames in a chronological order;
or
selecting image frames in the communication service topology profile according to a change of the communication service data, and playing the selected image frames in a chronological order.

8. The method for processing communication service data of claim 1, wherein the mirror database is a time series database.

9. An apparatus for processing communication service data, comprising at least one processor and a memory communicatively connected to the at least one processor, wherein the memory stores an instruction executable by the at least one processor which, when executed by the at least one processor, causes the at least one processor to carry out the method for processing communication service data of any of claims 1 to 7.

10. A computer-readable storage medium, storing a computer-executable instruction which, when executed by a computer, causes the computer to carry out the method for processing communication service data of any of claims 1 to 7.
